# FASCICULE DE BREVET EUROPEEN

(11) **EP 1 517 497 B1**
(45) Date de publication et mention de la délivrance du brevet: **13.02.2008**
(21) Numéro de dépôt: 04291209.7
(22) Date de dépôt: 12.05.2004
(51) Int. Cl.: H04L 12/66, H04L 29/06

(54) **Serveur de profil et application aux réseaux de communication**
Profil- und Anwendungsserver in Kommunikationsnetzwerken
Profile and application server in communication networks

(30) Priorité: 19.05.2003 FR 0305944
(43) Date de publication de la demande: 23.03.2005
(73) Titulaire: FRANCE TELECOM, 75015 Paris (FR)
(72) Inventeur: Bougant, François, 22300 Lannion (FR); Chatras, Bruno, 75012 Paris (FR); Delmond, Frédéric, 75011 Paris (FR)
(74) Mandataire: Joly, Jean-Jacques

(56) Documents cités:
- EP-A- 1 091 532
- WO-A-01/97454
- WO-A-01/97457
- JOURNAL ARTICLE: 'WIRELESS APPLICATION PROTOCOL ARCHITECTURE SPECIFICATION' WAP ARCHITECTURE VERSION 30 APR 1998 26 Avril 1999, pages 1 - 20, XP002101098

## Description

### Domaine technique et art antérieur

Dans le contexte actuel et à venir des usages des télécommunications, l'offre de services s'élargit très fortement pour les utilisateurs : services liés à l'accès, services de voix et services de données sont de plus en plus nombreux et complexes. Les services existants et à venir sont conçus pour permettre à chaque utilisateur de les personnaliser. Ils utilisent donc de plus en plus de données spécifiques à chaque utilisateur, ce qui conduit à la conception d'un profil d'utilisateur pour chaque service.

En conséquence, chaque service dispose d'éléments de profil concernant chaque utilisateur (on parlera d'éléments de profil utilisateur). Ces données décrivent les autorisations d'utilisation du service, l'état et la configuration du service, des informations de nature commerciale, etc.

Les services étant généralement conçus indépendamment les uns des autres, un même utilisateur est représenté par un ensemble disparate d'éléments de profils sans liens entre eux.

En outre, avec l'émergence d'une offre de services étendue, de plus en plus d'appels ou de sessions font intervenir plusieurs services simultanément ou successivement. La définition de chaque service précise comment celui-ci interagit avec les autres services : dans les réseaux, l'implémentation de ces interactions de services nécessite qu'un service connaisse la configuration des autres services qui interviennent dans l'appel ou la session. D'où le besoin pour une plate-forme exécutant un service d'accéder à des éléments de profils correspondants à d'autres services.

Aujourd'hui la prise en compte de l'ensemble des éléments constituant le profil d'un utilisateur induit une forte complexité dans la conception des applications. Cette complexité provient pour une part de la répartition de ces éléments sur différents équipements et de l'hétérogénéité ou de l'absence des interfaces donnant accès à ces éléments.

Ainsi dans le réseau d'un grand opérateur, ces éléments peuvent résider dans des entités aussi variées que les commutateurs du Réseau Téléphonique Commuté (RTC), les points de commande de service de l'architecture Réseau Intelligent, des bases de données spécifiques à certains services, les messageries vocales et autres plates-formes vocales, les bases de données des réseaux mobiles GSM (HLR,VLR), les contrôleurs d'appel pour les services VoIP (Gatekeeper, Proxy SIP), les plates-formes de service du monde IP (Portails, Serveurs d'Application,...), ou encore les serveurs d'authentification et d'autorisation d'accès à l'Internet (ex: Serveurs RADIUS).

Généralement, ces éléments ne sont pas structurés selon des modèles cohérents entre eux, puisque censés répondre uniquement aux besoins de mise en oeuvre d'un ou plusieurs services spécifiques. Il peut même apparaître que certaines données soient dupliquées dans plusieurs entités.

Par ailleurs, les entités contenant des éléments de profil d'un utilisateur n'offrent pas systématiquement d'interface permettant à une application externe d'y accéder en temps réel. La seule interface disponible est parfois une interface d'exploitation, présentant en général des contraintes de volumétrie et des temps de réponse relativement longs, très difficile à exploiter en temps réel. Lorsque des interfaces plus sophistiquées existent, elles sont rarement compatibles entre elles, du fait qu'aucun standard ne s'est imposé dans ce domaine. Les standards pour les Réseaux Intelligents, tels que par exemple décrits dans la recommandation ITU -T Q 1224 (1997) (Intelligent Networks-Distributed Functional Plane for Intelligent Network Caspability Set 2), proposent bien une interface normalisée pour l'accès à une base de donnée par une logique de service. Mais, dans les faits, cette norme n'est jamais appliquée et se limiterait de toute façon au contexte des services sur Réseau Intelligent.

Pour permettre à une application d'accéder à des éléments de profils correspondant à un ensemble de services indépendants, diverses solutions sont généralement utilisées ou proposées. Mais aucune de ces techniques de contournement ne constitue une solution satisfaisante. Même si une utilisation ponctuelle pour mettre en couvre un ou plusieurs services particuliers peut être envisagée, ces techniques ne sont pas généralisables.

Ainsi, selon une première solution, on fait évoluer chaque application de telle sorte qu'elle supporte plusieurs interfaces pour accéder à toutes les données nécessaires en interrogeant successivement plusieurs entités.

Cette première technique implique une forte évolution et complexification des applications. Elle engendre un fort développement initial sur l'ensemble des plates-formes concernées et des modifications nombreuses dès qu'un protocole évolue.

Selon une deuxième solution, on duplique l'ensemble des données nécessaires dans une entité cible (par exemple celle qui a besoin d'accéder aux données) pour les rendre accessibles en un seul point. Les données sont ainsi intégrées dans un modèle de référence, en général le modèle local au service ayant besoin d'accéder aux données.

Cette deuxième technique tend à compliquer le maintien de la cohérence des données localisées à différents endroits (entité actuelle, entité cible), impliquant l'évolution des procédures de mise à jour de ces données par le Système d'Information de l'opérateur.

Enfin, selon une troisième solution, on fait évoluer les interfaces de toutes les entités abritant des éléments de profil vers un standard unique.

Cette troisième technique implique une forte évolution des équipements qui abritent des informations ou des éléments de profil. Elle peut même se révéler impossible en pratique sur certains types d'équipements, en particulier les commutateurs du RTC qui n'ont plus vocation à subir de profonde modification.

Le document WO 01/97454 décrit un dispositif de traitement de données comportant une première interface d'accès, correspondant à un premier protocole d'accès, une première interface de sortie correspondant à un premier protocole de sortie, différent du premier protocole d'accès, une mémoire cache et une passerelle WAP.

### Exposé de l'invention

L'invention vise à résoudre ces problèmes.

Elle concerne d'abord un dispositif, ou encore un serveur, qui vise à optimiser les mécanismes d'accès à des informations (par exemple, des informations de service liées à des utilisateurs) réparties dans diverses entités (par exemple : diverses entités de réseaux de télécommunication).

L'invention concerne d'abord un dispositif de traitement de données tel que défini dans la revendication 1.

Un dispositif selon l'invention peut être incorporé ou intégré dans un réseau, et permet alors à toute application d'accéder, en temps réel et via un point d'accès fonctionnellement unique dans le réseau, à des informations réparties dans la base de données et/ou dans diverses entités ou équipements externes.

La notion de point d'accès fonctionnellement unique n'impose pas que tous les équipements contiennent l'ensemble des données. Il peut y avoir une répartition des données dans les équipements externes, des procédures de chaînage de requêtes étant par exemple mises en oeuvre entre les équipements. Chaque application demandeuse continue dans ce cas à ne voir qu'un seul équipement, le serveur ou le dispositif de traitement de données selon l'invention.

L'invention permet notamment de réaliser un serveur comportant une ou plusieurs interfaces d'accès afin de supporter un ou plusieurs protocoles. Une application demandeuse dispose d'un point d'accès unique à l'ensemble des profils utilisateurs, ce point d'accès étant matérialisé par le serveur. L'application interroge le serveur dans un des protocoles supportés par celui-ci.

Le serveur peut également comporter une ou plusieurs interfaces de sortie afin de pouvoir lui-même accéder à des équipements supportant des protocoles divers.

Le serveur comporte par ailleurs une base de données locale, ou est en communication avec une base de données, contenant des informations globales, par exemple des informations globales de profils d'utilisateurs, et un sous-ensemble de données spécifiques à certains services. Les informations sont de préférence intégrées dans un modèle unique, générique, et cohérent avec l'ensemble des modèles utilisés par les applications demandeuses et les équipements externes.

La base de données du serveur, ou qui communique avec le serveur, contient également des informations permettant d'adresser et de formater, sur les interfaces de sorties, les requêtes nécessaires pour interroger les équipements externes contenant le reste des informations, ainsi que de traduire les données reçues dans le format requis par l'application demandeuse.

En utilisant les informations ci-dessus, le serveur analyse les requêtes reçues sur les interfaces d'accès pour en déduire, formater et émettre la ou les requêtes nécessaires vers les équipements externes appropriés. Il prend en charge éventuellement l'agrégation des résultats pour fournir une réponse unique vers l'entité demandeuse.

L'invention concerne également un dispositif de traitement de données, comportant des moyens pour recevoir, selon un premier protocole d'accès, et traiter, des informations provenant de au moins un dispositif client, et des moyens pour traiter des informations, selon un premier protocole de sortie, différent du premier protocole d'accès, et les envoyer, en tant que client à un autre dispositif.

Ce dispositif peut donc agir à la fois en tant que serveur d'applications clientes et en tant que client d'au moins un autre dispositif.

Enfin, l'invention concerne également un procédé de traitement, par un dispositif de traitement de données, de requêtes informations provenant d'au moins une application, comportant :
- la réception d'au moins une telle requête, selon un premier protocole d'accès,
- la recherche desdites informations dans au moins une base de données,
- si toutes les informations ne sont pas disponibles sur ladite base de données, l'identification d'informations d'adressage contenues dans la base de données d'au moins un équipement externe disposant desdites informations non contenues dans la base de données, la formulation, par le dispositif de traitement de données, d'au moins une requête portant sur au moins une partie desdites informations, selon un premier protocole de sortie, différent du premier protocole d'accès et l'envoi de ladite requête audit au moins dispositif externe,
- la réception, par le dispositif de traitement de données, d'au moins une partie desdites informations, selon ledit premier protocole de sortie, et leur transformation selon le premier protocole d'accès, et
- l'envoi, à ladite application, des informations selon ce premier protocole d'accès.

Ce procédé peut en outre comporter, si toutes les informations ne sont pas disponibles sur ladite base de données, la formulation, par le dispositif de traitement de données, d'au moins deux requêtes portant sur au moins une partie desdites informations, selon un premier et un deuxième protocoles de sortie.

Les premier et deuxième protocoles de sortie peuvent être différents l'un de l'autre.

Selon un mode particulier de réalisation, la formulation, par le dispositif de traitement de données, d'au moins une requête portant sur au moins une partie desdites informations, selon un premier protocole de sortie, comporte une étape préalable de lecture, dans la base de données, de données ou d'informations d'adressage pour adresser ou identifier un autre dispositif auquel est relié le dispositif de traitement de données.

Un procédé selon l'un quelconque des modes de réalisation ci-dessus présente tous les avantages déjà indiqués en liaison avec le dispositif selon l'invention.

### Brève description des figures

- la figure 1 représente un mode de réalisation de l'invention,
- la figure 2 représente la structure d'un dispositif de traitement de données,
- la figure 3 donne un exemple de réalisation et d'application de l'invention,
- la figure 4 donne un exemple de structure de données.

### Description détaillée de modes de réalisation de l'invention

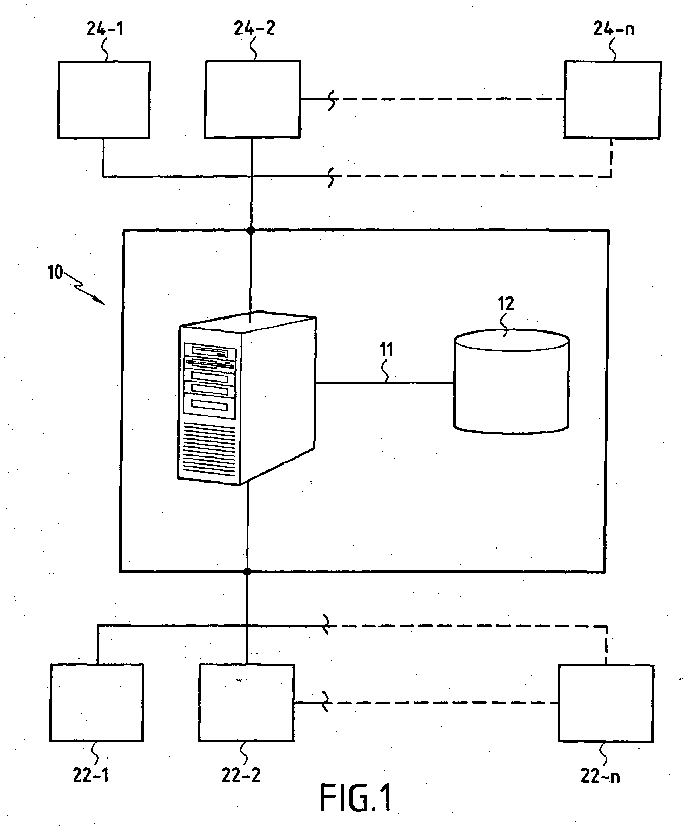

La figure 1 représente la structure générale d'un dispositif 10 de traitement de données, ou ordinateur (par la suite appelé serveur), pouvant être utilisé dans le cadre de la présente invention.

Des moyens de mémorisation 12, qui peuvent ou non être contenus dans le serveur 10, mémorisent des données sous forme d'une base de données. La référence 11 désigne des moyens d'accès à ces moyens de mémorisation.

Le serveur peut être relié à des éléments 22-1,... 22-n de différents réseaux, par exemple différents ordinateurs ou différents serveurs de différents réseaux. Selon un autre exemple, il peut aussi s'agir d'éléments tels que des commutateurs du réseau téléphonique commuté (RTC). Un autre exemple de réseau est un réseau GSM. Chacun de ces éléments va dialoguer ou échanger des informations avec le serveur 10 selon un protocole d'accès spécifique, mais en tant que « client ».

Chaque protocole d'accès se caractérise par exemple par une structuration des données (par exemple : structure des données identifiant un utilisateur), une structuration des requêtes, la manière dont sont traitées données et requêtes, ou des étapes de traitement des données et requêtes, éventuellement la manière de gérer certaines erreurs, ou des étapes de traitement des erreurs.

Deux protocoles seront différents, si ils diffèrent par au moins l'un des éléments ci-dessus, c'est-à-dire si ils ont des structurations différentes des données (par exemple : structures des données identifiant un utilisateur), et/ou des structurations différentes des requêtes, et/ou des procédés différents et/ou des étapes différentes de traitement des données et/ou requêtes, et/ou des procédés et/ou des étapes différentes de gestion ou de traitement d'erreurs.

Différents éléments de différents réseaux vont donc pouvoir dialoguer, en tant que « clients » avec le serveur 10 selon différents protocoles. Par exemple le réseau téléphonique commuté (RTC) dialoguera selon le protocole INAP, tandis qu'un réseau GSM dialoguera selon le protocole MAP.

Le serveur peut par ailleurs être relié à divers éléments, par exemple différents ordinateurs ou différents serveurs, 24-1,..., 24-n, de divers réseaux, par exemple un réseau RTC (ou un ou plusieurs commutateur(s) d'un tel réseau) et un réseau GSM. Le serveur 10 va dialoguer ou échanger des informations avec chacun de ces éléments selon, là encore, un protocole spécifique ; mais le serveur 10 agit alors comme client vis-à-vis de ces éléments.

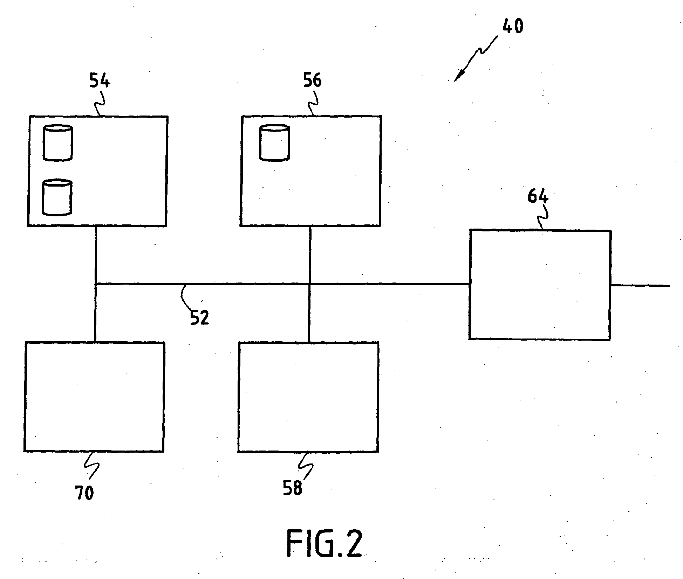

La figure 2 représente schématiquement, en bloc, les diverses composantes d'un appareil de traitement de données 40. Un microprocesseur 50 est relié, par un bus 52, à un ensemble de mémoires RAM 54 pour stocker des données, et à une mémoire ROM 56 dans laquelle des instructions de programme peuvent être mémorisées. Ce système peut en outre comporter un dispositif de visualisation 58, ou écran et des moyens périphériques tels que clavier ou souris.

La référence 64 désigne des moyens d'interface avec un réseau, par exemple de type modem. Selon un autre exemple, il peut s'agir d'un port Ethernet associé à une ou plusieurs carte(s) réseau. Il peut aussi s'agir d'un (ou de plusieurs) port(s) spécifique(s) pour supporter un ou des protocole(s) particulier(s).

Le serveur 10 a, globalement, une structure du même type, avec un ou plusieurs processeur(s), une ou plusieurs zone(s) de stockage de données et diverses connexions aux réseaux. Le serveur peut comporter en outre une ou plusieurs mémoire(s) dans lesquelles des instructions de programme peuvent être mémorisées, ainsi d'ailleurs que les données relatives à chacun des protocoles utilisés soit lors d'une demande d'information par les éléments 22-1,...22-n soit lors d'une demande d'information vers les éléments 24-1, ...24-n.

L'invention s'applique également au cas d'un serveur auquel est relié, selon un premier protocole, en tant que « client », au moins un élément d'un réseau, ce serveur étant lui-même relié, en tant que client à au moins un élément d'un autre réseau selon un deuxième protocole, différent du premier.

Le serveur selon l'invention comporte donc :
- au moins une première interface logicielle, ou un premier protocoles d'accès, permettant de dialoguer avec, ou de recevoir des informations ou des requêtes ou des demandes d'information de, au moins une application cliente,
- et au moins une deuxième interface logicielle, ou un premier protocole de sortie, permettant au serveur, agissant cette fois en tant que client, de dialoguer avec - ou de recevoir des informations de, ou d'envoyer des requêtes vers - au moins une autre application.

Autrement dit, le serveur se comporte comme un serveur pour au moins un élément d'un réseau, selon un premier protocole, et se comporte comme un client pour au moins un élément d'un réseau, selon un deuxième protocole, différent du premier.

Le serveur peut également comporter au moins deux interfaces logicielles d'accès, ou au moins deux protocoles d'entrée ou d'accès, permettant de dialoguer ou de recevoir des informations ou des requêtes ou des demandes d'information de, au moins deux applications différentes (correspondant à deux des éléments 22-1,...., 22-n) ou au moins deux réseaux de communication différents, ces applications ou éléments ou réseaux se comportant comme client par rapport au serveur 10.

Le serveur peut également comporter au moins deux interfaces logicielles de sortie, ou au moins deux protocoles de sortie, dont au moins un est différent d'au moins un des protocoles d'entrée, permettant de dialoguer avec, ou d'émettre des informations ou des requêtes ou des demandes d'information vers, au moins deux applications différentes (correspondant à deux des éléments 24-1,..., 24-n) ou au moins deux réseaux de communication différents, le serveur se comportant alors comme client vis-à-vis de ces derniers.

Le serveur pourra avoir alors accès, en tant que client, à différents types de réseaux externes, selon ces divers protocoles. Par exemple, le serveur pourra communiquer avec un réseau fonctionnant selon le protocole LDAP, et avec un réseau privé fonctionnant selon un protocole propriétaire.

Grâce aux divers interfaces ou protocoles de sortie, le serveur peut avoir accès à des informations ou à des bases de données externes contenues dans ces divers éléments ou réseaux externes.

Le serveur a aussi accès à la base de données locale 12. Elle peut être soit contenue dans le serveur 10 lui-même, soit contenue dans un autre serveur, auquel le serveur 10, par les moyens 11, aura accès ou qu'il pourra consulter.

Cette base de données locale contient un sous-ensemble des informations éventuellement demandées par les éléments 22-1,...., 22-n. Selon un exemple, il peut s'agir d'informations globales et, optionnellement, d'un ou plusieurs ensembles d'informations spécifiques correspondant chacun aux données d'un service particulier (stockées sur le serveur).

Selon encore un exemple, les diverses informations, génériques et spécifiques, concernent divers utilisateurs de divers services.

Les informations à rechercher, par exemple les profils utilisateurs, sont décrits dans un modèle propre au serveur. Ce modèle est de préférence générique,ou adapté à tous les protocoles d'accès ou de sortie.

De plus, pour chaque élément d'information qui est requis par un réseau mais qu'elle ne contient pas, la base de donnée 12 stocke des informations d'adressage, permettant d'atteindre l'équipement, parmi les équipements 24-1,....24-n, à interroger ou à adresser et disposant de l'élément d'information, ainsi que le protocole de sortie à utiliser pour atteindre cet équipement.

Elle peut également comporter un identifiant de la ou des données correspondantes dans l'équipement à interroger, ainsi que des règles de structuration spécifique permettant de construire une requête concernant l'élément d'information en question.

Il se peut qu'une requête formulée par une application cliente du serveur 10 porte sur plusieurs éléments d'information, non contenues dans la base de données 12, mais contenues dans des éléments ou équipements différents 24-1.....24-n.

Dans ce cas, ce sont autant d'interrogations que le serveur va effectuer vers ces divers éléments 24-1...., 24-n, éventuellement à l'aide de différents protocoles de sortie.

Il se peut que ces diverses informations, obtenues à partir de divers éléments 24-1..., 24-n, soient redondantes.

Ces informations peuvent alors être associées et/ou triées au niveau hiérarchique supérieur, c'est-à-dire par le serveur 10. Autrement dit, si diverses informations correspondent à un même utilisateur, il peut y avoir d'une part association par le serveur, et éventuellement identification ou tri des informations redondantes dans le serveur, de ces différentes informations.

Le serveur pourra donc envoyer plusieurs requêtes à divers éléments externes, suite à une requête unique d'un même élément « client ».

Les requêtes émises vers les équipements externes peuvent être formées à partir de règles générales dépendant du protocole à utiliser et, éventuellement, de règles spécifiques dépendant du modèle de donnée utilisé par l'équipement distant.

Lorsqu'un réseau a besoin d'une information sur un utilisateur, un serveur ou un élément de ce réseau va envoyer au serveur 10 une requête, en fait une demande portant sur ces informations. Cette requête est formulée selon le protocole qui régit les communications entre le réseau demandeur et le serveur 10. En particulier, l'utilisateur au sujet duquel des informations sont demandées est identifié par un identifiant structuré selon ce protocole.

Les interfaces d'accès permettent par exemple aux applications ou aux éléments d'émettre, de préférence en temps réel, les requêtes suivantes ou toute combinaison de ces requêtes :
- Lecture des informations d'un utilisateur communes à tous les services;
- Lecture des informations d'un utilisateur spécifiques à un service;
- Lecture de toutes les informations liées à un utilisateur;
- Ajout/modification/suppression d'informations liées à un utilisateur.

Le serveur dispose de moyens pour traiter les requêtes qu'il reçoit. De préférence, ce traitement est générique : il est indépendant de la sémantique des informations contenues dans les requêtes, afin d'éviter que l'ajout d'un nouveau type de donnée dans les bases externes conduise à des développements logiciels supplémentaires.

Le serveur dispose de moyens pour, ou est programmé pour, effectuer une recherche dans la base de données locale 12, afin de vérifier si les données demandées y sont, ou non, disponibles.

Si elles sont disponibles, le serveur 10 structure les données correspondantes selon le protocole « d'entrée » qui régit les communications entre le réseau demandeur et le serveur 10. Ces données sont ensuite envoyées au réseau ou à l'élément demandeur, selon ce même protocole de communication.

Si elles ne sont pas disponibles, le serveur 10 va alors identifier dans la base de données des informations d'adressage, permettant d'atteindre l'équipement (ou les équipements), parmi les équipements ou les réseaux 24-1,..., 24-n, à interroger ou à adresser et disposant de l'élément d'information recherché, ainsi que le (ou les) protocole(s) de sortie à utiliser pour atteindre cet (ou ces) équipement(s).

En d'autres termes, le serveur est donc programmé pour pouvoir émettre, de préférence en temps réel, des requêtes de lecture d'informations, par exemple d'informations spécifiques à un utilisateur (via un de ses identifiants), vers l'un des équipements externes 24-1,... 24-n..

Ce dernier (ou ces derniers) retransmet(tent) alors les données au serveur, selon le(s) même(s) protocole(s) « de sortie », et notamment selon le format et la structure imposés par ce(s) protocole(s).

Le serveur 10, à son tour, va retransmettre l'information à l'élément ou au réseau demandeur selon le protocole d'entrée correspondant. En cas de succès, le serveur retransmet donc, dans le format et avec le protocole approprié, la donnée retournée dans la réponse par l'élément détenteur.

Le serveur va donc convertir un format, ou plusieurs formats, des données imposé(s) par un protocole de sortie en un format imposé par un protocole d'entrée.

En d'autres termes, si ladite ou lesdites informations ne sont pas disponibles dans la base 12, il y a génération d'une requête vers l'élément (ou les éléments) détenteur(s) de ces informations (base externe ou équipement de réseau), avec le protocole approprié, sur l'interface de sortie. Le serveur est donc programmé pour, ou comprend des moyens pour, générer une telle requête ou de telles requêtes.

Les moyens de traitement des requêtes reçues par le serveur peuvent être programmés pour un, ou plusieurs, traitement(s) dit(s) spécifique(s) et propre(s) au protocole utilisé, et un traitement générique de la, ou des, opération(s) demandée(s).

Selon un exemple, le traitement d'une requête entrante s'effectue en plusieurs étapes :
1. Traitement spécifique pour réception de la requête entrante ; celle-ci est convertie en opérations ou ensemble(s) d'opérations à effectuer (par exemple, les opérations utilisées pour la gestion des ressources informatiques : consultation, création, modification, suppression) avec le, ou les, objet(s) sur le(s)quel(s) s'applique chaque opération. L'objet est ici la référence de la donnée, avec, si besoin, des informations complémentaires dépendant de l'opération (par exemple, la nouvelle valeur de la donnée en cas de demande de modification). En fonction de l'adresse de l'équipement demandeur et de la nature du système, le serveur a également déduit l'origine de la requête (par exemple, un commutateur du réseau géré par France Télécom)
2. Traitement générique pour la, ou les, opération(s) demandée(s)
3. Si besoin :
   a. Traitement spécifique pour création d'une, ou plusieurs, requête(s) sortante(s) sur la, ou les, interface(s) de sortie correspondante,
   b. Traitement spécifique pour réception des réponses sur la, ou les, interface(s) de sortie
4. Traitement générique pour interprétation des résultats
5. Traitement spécifique pour création de la réponse sur l'interface d'accès.

Selon un exemple, le traitement générique comporte les étapes suivantes :
1. Pour chaque opération, le serveur vérifie si tous les objets invoqués sont contenus dans la base locale :
   a. Si oui, le serveur effectue l'opération sur la base,
   b. Si non, les objets dans la base sont représentés par un, ou plusieurs, pointeur(s) vers des éléments externes, avec les informations complémentaires d'adressage stockées dans la base, comme déjà expliqué ci-dessus. Selon les cas, le serveur décompose l'opération en plusieurs opérations élémentaires (par exemple : portant sur un seul objet, ou un seul pointeur) et les fait suivre pour construire des requêtes sortantes sur les interfaces de sortie concernées. Les réponses retournées par les éléments externes sont converties en résultats d'opération. Il peut y avoir alors plusieurs modes de traitement générique possible, dans le cas où le serveur reçoit un échec:
      i. Mode dit « du meilleur effort » (« best effort ») : le serveur ne tient pas compte de cet échec et continue à traiter les résultats des autres opérations,
      ii. Mode dit « arrêt sur erreur » (« stop-on-error ») : le serveur ne traite pas les résultats suivants, les précédents restant valides ;
      iii. Mode dit « acide » (« acid ») : le serveur ne traite pas les résultats suivants et initialise de nouvelles opérations qui annulent les précédentes. Ce mode est surtout pertinent pour les opérations d'écriture.

   Le mode de traitement des résultats, de même que celui des informations complémentaires, pourra être défini dans la base de données locale.
2. Le serveur 10 regroupe les résultats obtenus :
   a. En cas de succès, il les fait suivre sur l'interface d'accès pour répondre à la requête entrante ;
   b. En cas d'échec de toutes les opérations ou de certaines opérations en mode « acid », il fait suivre l'échec sur l'interface de sortie. En cas d'échec de certaines opérations en mode « best effort » ou « stop-on-error », il retourne les résultats partiellement obtenus sur l'interface d'accès.

Un exemple de réalisation de l'invention va être décrit, qui se place dans le contexte de l'introduction de la gestion du nomadisme dans les accès fixes (RTC, IP sur ADSL) et mobiles (GSM, GPRS), pour supporter plusieurs types de service (services conversationnels sur réseau fixe et mobile, services d'accès haut débit, services multimédias rendus sur des terminaux évolués).

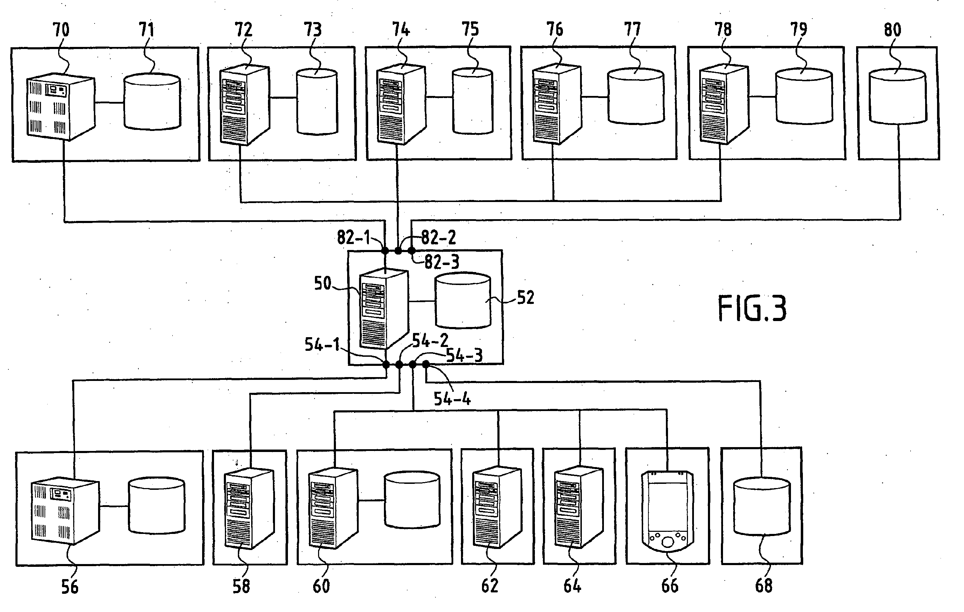

Le système selon cet exemple est représenté avec une architecture générale dans la Figure 3, autour d'un serveur 50 relié à, ou contenant, une base de données 52.

Les applications clientes, ou demandeuses d'information, et connectées à des interfaces d'accès 54-1, 54-2, 54-3, 54-4 du serveur sont les suivantes :
1. Les fonctions de traitement d'appel de commutateurs 56 du RTC ; dans ce cas, le serveur 50 est appelé pour fournir tout ou partie du profil utilisateur habituellement stocké sur les commutateurs;
2. Les logiques de services de points de commande de service (PCS) 58, 60 de l'architecture Réseau Intelligent des réseaux fixes et mobiles;
3. Les logiques de services des équipements de type Service Node ou assimilés ;
4. Les fonctions de traitement d'appel de contrôleurs ou serveurs 64 d'appels pour les services VoIP;
5. Les fonctions de contrôle d'admission des Gatekeeper ou équipements assimilés (ex serveurs d'accès 62 pour l'accès Internet à haut débit, ADSL) ;
6. Les portails de service ;
7. Certaines applications dans des terminaux intelligents 66;
8. Les applications 68 des plates-formes de service du monde IP.

Les interfaces et protocoles d'accès sont alors :
- Une interface 1NAP pour l'application 1 ;
- Une interface MAP pour l'application 2 ;
- Une interface LDAP, pour les applications 3 à 8. Ces applications sont ainsi vues comme des applications "clientes" au sens LDAP.

Outre le serveur 50 lui-même, des entités contenant certaines données d'utilisateur peuvent être les suivantes
1. des commutateurs 70 du Réseau Téléphonique Commuté ;
2. des points 72 de commande de service de l'architecture Réseau Intelligent ;
3. des messageries vocales et autres plates-formes vocales ;
4. des serveurs de données 78 des réseaux mobiles GSM / GPRS (HLR, VLR) ;
5. des serveurs ou contrôleurs d'appel 76 pour les services VoIP (Gatekeeper, Proxy SIP) ;
6. des plates-formes de service du monde IP (Portails, Serveurs d'Application,...
7. des serveurs 74 d'authentification et d'autorisation d'accès à Internet;
8. Des bases de données 80 spécifiques à certains services ;

Les références 71, 73, 75, 77, 79 désignent des moyens de mémorisation ou des bases de données locales.

Les interfaces (82-1, 82-2, 82-3) de sortie sont alors les suivantes :
- Une interface 82-1 supportant le transfert des commandes locales de service (ex : impulsions DTMF via le clavier téléphonique), une interface SS7 dédiée, ou encore une interface utilisée par l'exploitant (RHM). Cette interface est dédiée à l'entité ou aux moyens 70 ;
- Une interface 82-2 LDAP, pour les entités 72 à 78. Le serveur So en charge de générer les requêtes de données vers les éléments détenteurs est ainsi vu comme une application "cliente" au sens LDAP ;
- Une interface 82-3 supportant un protocole propriétaire, pour l'entité ou aux moyens 80.

En ce qui concerne la base de données 52, elle contient des informations selon un modèle de référence et dans un annuaire LDAP.

En outre, pour un élément (ou groupe d'éléments) d'information demandée et non disponible en local, le serveur, ou la base de donnée 52, stocke par exemple les informations suivantes :
- Des informations d'adressage permettant d'atteindre l'équipement disposant de l'élément. Si l'équipement est raccordé à un réseau IP, il s'agit d'une adresse IP et d'un numéro de port. Si l'équipement est raccordé à un réseau de signalisation, il s'agit d'une appellation globale SCCP et d'un numéro de sous-système.
- Le type de protocole (et sa version) à utiliser pour atteindre cet équipement. Si l'équipement est raccordé à un réseau IP, il s'agit par exemple de LDAP V2 ou de SNMP V I.
- L'identifiant de la ou des données correspondantes dans l'entité cible. Dans le cas d'une entité mettant en oeuvre un serveur LDAP ou une MIB SNMP, il s'agit du nom d'objet ("DistinguishedName") de la ou des données correspondantes.
- Des Règles de structuration spécifiques permettant de construire une requête concernant l'élément.

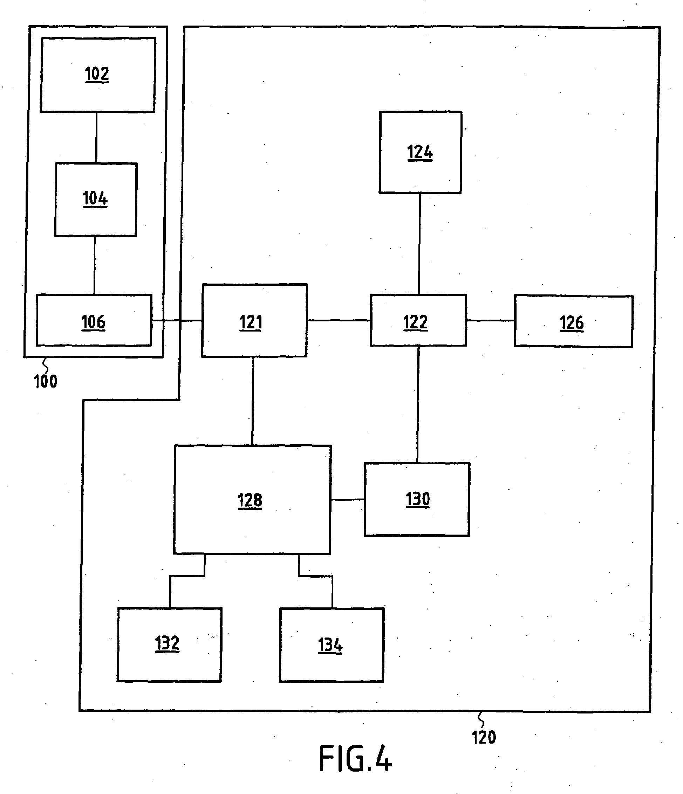

La figure 4 donne un exemple de réalisation d'un modèle d'information pour la base de donnée locale 12.

Sur cette figure, la référence 100 désigne des informations globales, et la référence 120 des informations spécifiques, qui dépendent d'un service particulier.

Selon un exemple, les informations globales contiennent, pour chaque utilisateur, des données 106 générales (par exemple, la langue de l'utilisateur), des données 104 concernant un identifiant de cet utilisateur (par exemple : son numéro de téléphone) et des données 102 d'authentification (par exemple : un niveau d'authentification, un format, une valeur).

Chaque utilisateur est identifié par les données 104 couplées aux données 102.

Les données 106 d'utilisateur permettent d'accéder aux données 120 spécifiques d'un service, et notamment à des données 121 concernant le profil de cet utilisateur (par exemple : un intitulé, une liste de restrictions imposées, des informations sur des modes de présentation de données à cet utilisateur). Ces informations 121 peuvent faire partie exclusivement des informations spécifiques dépendant d'un service unique, ou peuvent aussi être communes à plusieurs services.

A partir des informations 121, on peut avoir accès à des informations 122 portant sur le profil du service spécifique concerné, par exemple, des informations de restriction (selon encore un exemple : autorisation d'émission d'appels en mode local, uniquement). A partir de ces informations 122, on peut avoir accès à des informations 124 de données personnalisables de services, à des informations 126 sur des données de service (par exemple : information sur l'entité, parmi les entités 24-1,....24-n, qui détient les informations demandées), à des informations 130 sur les sessions de services mises en oeuvre.

Le profil d'utilisateur 121 est par exemple fourni lors d'une section d'accès dont les caractéristiques sont regroupées dans un ensemble d'informations 128 (il s'agit par exemple : d'états de connection, de caractéristiques d'attachement à tel ou tel réseau, de la localisation géographique de l'appelant,....).

Les informations sur les sessions d'accès 128 peuvent aussi être fournies dans le cadre des informations 130 sur les sessions de service.

Parmi les informations sur les sessions d'accès, un ensemble 132 regroupe des informations sur les terminaux d'accès (identifiant, catégorie matérielle, catégorie logicielle) et un autre ensemble d'informations 134 regroupe les informations sur les réseaux d'accès (identifiant, caractéristique).

Ce schéma de la figure 4 est donné à titre d'exemple, et d'autres structures d'informations pourront être mises en oeuvre.

L'invention est particulièrement bien adaptée au problème de la recherche de profils d'utilisateurs de divers services téléphoniques et/ou Internet.

Chaque profil est unique pour un utilisateur donné.

Le profil utilisateur est défini comme l'ensemble des informations concernant utilisateur, qui sont des informations globales et des ensembles d'informations spécifiques à chaque service.

Les données utilisateur d'un service sont constituées d'un ou plusieurs ensembles d'informations spécifiques. Par informations globales, il faut entendre un ou plusieurs identifiant permettant d'accéder au profil (clé d'accès) plus éventuellement des informations d'authentification.

Le serveur a une vue globale du profil utilisateur ; il stocke au minimum des informations de base sur chaque utilisateur, lui permettant de l'identifier et de déterminer la localisation des informations qu'il ne stocke pas. Des informations liées à certains services peuvent également être stockées dans le serveur, les autres informations restant dispersées dans les différentes bases externes et équipements de réseau actuels ou futurs.

Lorsqu'une application demande des informations qu'il ne détient pas, le serveur est en charge d'interroger les entités externes sur lesquelles ces informations sont dispersées, afin de transmettre une réponse complète. Ainsi, l'intégration dans une architecture de réseau d'un serveur jouant le rôle d'un "point d'accès" intermédiaire à l'ensemble des données d'utilisateur permet de palier à toutes les limitations d'échange de données :
- Elle est une solution permettant le partage de données d'utilisateur entre opérateurs et fournisseurs de service, tout en assurant une vue globale sur le profil de l'utilisateur;
- Elle masque aux entités abritant les applications les données et les interfaces d'accès aux bases externes ;
- Elle masque à ces mêmes entités les différences entre les modèles de données contenues dans les bases externes. Elle présente ainsi l'opportunité de définir un modèle de donnée unique pour décrire toutes les informations liées aux utilisateurs ;
- Elle facilite l'adressage des requêtes de données en présentant un point d'accès unique.

De plus, elle facilite l'introduction de nouveaux services. En effet, elle n'impose pas de contrainte sur la localisation des données associées à de nouveaux services. Elles peuvent être intégrées à l'équipement qui exécute le service ou implantées dans ce serveur.

Le serveur joue un rôle d'intermédiaire entre les entités demandant et fournissant des éléments de profil utilisateur. A ce titre, si besoin, il peut assurer l'identification, l'authentification, la facturation, etc. de l'entité ayant émis la demande.

Cette intégration peut également faciliter la convergence des réseaux fixes et mobiles en offrant l'opportunité d'intégrer aussi les fonctions liées à la gestion du nomadisme (état de mobilité d'un utilisateur entre des points d'accès réseau fixes et mobiles).

Selon un autre exemple d'application, il est possible de prévoir au moins deux serveurs tels que le serveur 10 et ayant chacun les fonctionnalités décrite ci-dessus, chaque serveur recevant les requêtes d'équipements ou de réseaux localisés dans une zone géographique donnée.

## Revendications

1. Dispositif (10) de traitement de données, comportant une première interface d'accès, correspondant à un premier protocole d'accès, au moins une première interface de sortie, correspondant à un premier protocole de sortie, différent du premier protocole d'accès, une base de données (12), des moyens (11) de communication avec la base de données (12), et des moyens (50) pour recevoir, selon l'un des protocoles d'accès, une première requête portant sur des informations, et des moyens pour rechercher si la base de données contient lesdites informations, et des moyens pour formuler, selon le premier protocole de sortie, au moins une deuxième requête portant sur des informations demandées dans la première requête et non contenues dans la base de données
et dont la base de données (12) contient en outre des informations d'adressage d'au moins un équipement externe (24-1,... 24-n) disposant desdites informations non contenues dans la base de données, ledit dispositif (10) de traitement de données comprenant des moyens pour identifier les informations d'adressage contenues dans la base de données et pour envoyer la deuxième requête audit au moins équipement externe (24-1,... 24-n).

2. Dispositif selon la revendication 1, comportant au moins une deuxième interface d'accès, correspondant à un deuxième protocole d'accès, différent du premier.

3. Dispositif selon l'une des revendications 1 ou 2, comportant en outre au moins une deuxième interface de sortie, correspondant à un deuxième protocole de sortie.

4. Dispositif selon l'une des revendications 1 à 3, les protocoles d'accès étant choisis parmi celui d'un Réseau Téléphonique commuté, celui d'un réseau de téléphonie mobile, et celui du réseau Internet.

5. Dispositif selon l'une des revendications 1 à 4, comportant en outre des moyens (50) pour formater des données de la base de données selon l'un des protocoles d'accès.

6. Dispositif selon l'une des revendications 1 à 5, comportant en outre des moyens (50) pour convertir des données exprimées selon un protocole de sortie en données exprimées selon l'un des protocoles d'entrée.

7. Dispositif selon l'une des revendications 1 à 6, comportant en outre des moyens pour recevoir, selon ledit protocole de sortie, lesdites informations demandées dans la première requête et non contenues dans la base de données.

8. Dispositif selon la revendication 7, comportant des moyens (50) pour convertir des données, correspondant auxdites informations demandées dans la première requête et non contenues dans la base de données, et structurées selon ledit protocole de sortie en données structurées selon l'un des protocoles d'accès.

9. Dispositif selon l'une quelconque des revendications 1 à 8, la base de données (12) contenant en outre des informations relatives au protocole de sortie à utiliser pour communiquer avec l'autre dispositif.

10. Procédé de traitement, par un dispositif de traitement de données (10), de requêtes d'informations provenant d'au moins une application, comportant la réception d'au moins une telle requête, selon un premier protocole d'accès, et la recherche desdites informations dans au moins une base de données (12), le procédé comportant en outre :
- si toutes les informations ne sont pas disponibles sur ladite base de données, l'identification d'informations d'adressage contenues dans la base de données et au moins un équipement externe (24-1,... 24-n) disposant desdites informations non contenues dans la base de données, la formulation, par le dispositif de traitement de données, d'au moins une requête portant sur au moins une partie desdites informations, selon un premier protocole de sortie, différent du premier protocole d'accès, et l'envoi de ladite requête audit au moins équipement externe (24-1,... 24-n),
- la réception, par le dispositif de traitement de données, d'au moins une partie desdites informations, selon ledit premier protocole de sortie, et leur transformation selon le premier protocole d'accès, et
- l'envoi, à ladite application, des informations selon ce premier protocole d'accès.

11. Procédé selon la revendication 10, comportant en outre, si toutes les informations ne sont pas disponibles sur ladite base de données, la formulation, par le dispositif de traitement de données, d'au moins deux requêtes portant sur au moins une partie desdites informations, selon un premier et un deuxième protocoles de sortie.

12. Procédé selon la revendication 11, les premier et deuxième protocoles de sortie étant différents l'un de l'autre.

## Claims

1. Data processing device (10), comprising a first access interface, corresponding to a first access protocol, at least a first output interface, corresponding to a first output protocol, different from the first access protocol, a database (12), means (11) for communication with the database (12), and means (50) for receiving, according to one of the access protocols, a first request relating to information, and means for ascertaining whether the database contains the said information, and means for formulating, according to the first output protocol, at least a second request relating to information requested in the first request and not contained in the database,
and whose database (12) also contains address information of at least one item of external equipment (24-1, ... 24-n) having the said information not contained in the database, the said data processing device (10) comprising means for identifying the address information contained in the database and for sending the second request to the said at least one item of external equipment (24-1, ... 24-n).

2. Device according to Claim 1, comprising at least one second access interface, corresponding to a second access protocol, different from the first.

3. Device according to one of Claims 1 or 2, also comprising at least one second output interface, corresponding to a second output protocol.

4. Device according to one of Claims 1 to 3, the access protocols being chosen from that of a switched telephone network, that of a mobile telephone network and that of the Internet network.

5. Device according to one of Claims 1 to 4, also comprising means (50) for formatting data of the database according to one of the access protocols.

6. Device according to one of Claims 1 to 5, also comprising means (50) for converting data expressed according to an output protocol into data expressed according to one of the access protocols.

7. Device according to one of Claims 1 to 6, also comprising means for receiving, according to the said output protocol, the said information requested in the first request and not contained in the database.

8. Device according to Claim 7, comprising means (50) for converting data, corresponding to the said information requested in the first request and not contained in the database, and structured according to the said output protocol, into data structured according to one of the access protocols.

9. Device according to any one of Claims 1 to 8, the database (12) also containing information relating to the output protocol to be used to communicate with the other device.

10. Method for processing, by a data processing device (10), information requests originating from at least one application, comprising the receipt of at least one such request, according to a first access protocol, and the search for the said information in at least one database (12), the method also comprising:
- if all the information is not available in the said database, the identification of address information contained in the database and at least one item of external equipment (24-1, ... 24-n) having the said information not contained in the database, the formulation, by the data processing device, of at least one request relating to at least one portion of the said information, according to a first output protocol, different from the first access protocol, and the sending of the said request to the said at least one item of external equipment (24-1, ... 24-n),
- the receipt, by the data processing device, of at least a portion of the said information, according to the said first output protocol, and its conversion according to the first access protocol, and
- the transmission, to the said application, of the information according to this first access protocol.

11. Method according to Claim 10, also comprising, if all the information is not available in the said database, the formulation, by the data processing device, of at least two requests relating to at least a portion of the said information, according to a first and a second output protocol.

12. Method according to Claim 11, the first and second output protocols being different from one another.

## Patentansprüche

1. Datenverarbeitungsvorrichtung (10), die eine erste Zugangsschnittstelle aufweist, die einem ersten Zugangsprotokoll entspricht, mindestens eine erste Ausgangsschnittstelle, die einem ersten Ausgangsprotokoll entspricht, das von dem ersten Zugangsprotokoll unterschiedlich ist, eine Datenbank (12) und Mittel (11) zur Kommunikation mit der Datenbank (12) sowie Mittel (50), um gemäß einem der Zugangsprotokolle eine erste Anfrage zu empfangen, die Informationen betrifft, und Mittel zum Suchen, ob die Datenbank die Informationen enthält, und Mittel, um gemäß dem ersten Ausgangsprotokoll mindestens eine zweite Anfrage zu formulieren, die Informationen betrifft, die in der ersten Anfrage verlangt wurden und in der Datenbank nicht enthalten sind,
und wobei, die Datenbank (12) ferner Adressierinformationen mindestens einer externen Ausstattung (24-1, ..., 24-n) aufweist, die über die Informationen verfügt, die in der Datenbank nicht enthalten sind, wobei die Datenverarbeitungsvorrichtung (10) Mittel aufweist, um die Adressierinformationen, die in der Datenbank enthalten sind, zu identifizieren und um die zweite Anfrage an die mindestens eine externe Ausstattung (24-1, ..., 24-n) zu senden.

2. Vorrichtung nach Anspruch 1, die mindestens eine zweite Zugangsschnittstelle aufweist, die einem zweiten Zugangsprotokoll entspricht, das vom ersten unterschiedlich ist.

3. Vorrichtung nach einem der Ansprüche 1 oder 2, die ferner mindestens eine zweite Ausgangsschnittstelle aufweist, die einem zweiten Ausgangsprotokoll entspricht.

4. Vorrichtung nach einem der Ansprüche 1 bis 3, wobei die Zugangsprotokolle aus denen eines öffentlichen Fernsprechnetzes, eines Mobiltelephonienetzes und dem des Internets ausgewählt werden.

5. Vorrichtung nach einem der Ansprüche 1 bis 4, die ferner Mittel (50) zum Formatieren der Daten der Datenbank gemäß einem der Zugangsprotokolle aufweist.

6. Vorrichtung nach einem der Ansprüche 1 bis 5, die ferner Mittel (50) aufweist, um Daten, die gemäß einem Ausgangsprotokoll ausgedrückt sind, in Daten, die gemäß einem der Zugangsprotokolle ausgedrückt sind, umzuwandeln.

7. Vorrichtung nach einem der Ansprüche 1 bis 6, die ferner Mittel aufweist, um gemäß dem Ausgangsprotokoll die in der ersten Anfrage verlangten Daten, die nicht in der Datenbank enthalten sind, zu empfangen.

8. Vorrichtung nach Anspruch 7, die Mittel (50) aufweist, um Daten, die den in der ersten Anfrage verlangten Daten, die nicht in der Datenbank enthalten und gemäß dem Ausgangsprotokoll strukturiert sind, entsprechen, in Daten umzuwandeln, die gemäß einem der Zugangsprotokolle strukturiert sind.

9. Vorrichtung nach einem der Ansprüche 1 bis 8, wobei die Datenbank (12) ferner Informationen in Zusammenhang mit dem zum Kommunizieren mit der anderen Vorrichtung zu verwendenden Ausgangsprotokoll enthält.

10. Verfahren zum Verarbeiten durch eine Datenverarbeitungsvorrichtung (10) von Informationsanfragen, die von mindestens einer Anwendung kommen, das das Empfangen mindestens einer solchen Anfrage gemäß einem ersten Zugangsprotokoll und das Suchen der Informationen in mindestens einer Datenbank (12) aufweist, wobei das Verfahren Folgendes aufweist:
- wenn nicht alle Informationen in der Datenbank verfügbar sind, Identifikation von Adressierinformationen, die in der Datenbank enthalten sind, und mindestens einer externen Ausstattung (24-1, ..., 24-n), die über die Informationen, die nicht in der Datenbank enthalten sind, verfügt, Formulieren durch die Datenverarbeitungsvorrichtung mindestens einer Anfrage, die mindestens einen Teil der Informationen betrifft, gemäß einem Ausgangsprotokoll, das von dem ersten Zugangsprotokoll unterschiedlich ist, und Senden der Anfrage an die mindestens eine externe Ausstattung (24-1, ..., 24-n),
- Empfangen durch die Datenverarbeitungsvorrichtung mindestens eines Teils der Informationen gemäß dem ersten Ausgangsprotokoll und ihr Umwandeln gemäß dem ersten Zugangsprotokoll, und
- Senden der Informationen gemäß diesem ersten Zugangsprotokoll an die Anwendung.

11. Verfahren nach Anspruch 10, das ferner, wenn nicht alle Informationen in der Datenbank verfügbar sind, das Formulieren durch die Datenverarbeitungsvorrichtung gemäß einem ersten und einem zweiten Ausgangsprotokoll von mindestens zwei Anfragen, die mindestens einen Teil der Informationen betreffen, aufweist.

12. Verfahren nach Anspruch 11, wobei das erste und das zweite Ausgangsprotokoll voneinander unterschiedlich sind.
